# EUROPÄISCHE PATENTSCHRIFT

(11) **EP 2 665 581 B1**
(45) Veröffentlichungstag und Bekanntmachung des Hinweises auf die Patenterteilung: **20.01.2016**
(21) Anmeldenummer: 12702459.4
(22) Anmeldetag: 20.01.2012
(51) Int. Cl.: B23B 5/08, B23P 23/04, B23P 25/00, B23Q 11/10, B23Q 17/00, B23Q 39/02, C21D 9/30, C21D 9/32, C21D 1/18, C21D 1/56, C21D 1/60, C21D 1/613

(54) **VERFAHREN UND WERKZEUGMASCHINE ZUM BEARBEITEN UND HÄRTEN VON METALLISCHEN WERKSTÜCKEN**
PROCESS AND MACHINE TOOL FOR MACHINING AND HARDENING METALLIC WORKPIECES
PROCÉDÉ ET MACHINE-OUTIL POUR L'USINAGE ET LE DURCISSEMENT DE PIÈCES MÉTALLIQUES

(30) Priorität: 21.01.2011 DE 102011003004
(43) Veröffentlichungstag der Anmeldung: 27.11.2013
(73) Patentinhaber: MAG IAS GmbH, 73033 Göppingen (DE)
(72) Erfinder: MEIDAR, Moshe, Israel, New York, NY 10022 (US); HORN, Wolfgang, 73035 Göppingen (DE); LANG, Heiner, 73728 Esslingen (DE)
(74) Vertreter: Rau, Schneck & Hübner Patentanwälte Rechtsanwälte PartGmbB
(86) Internationale Anmeldenummer: PCT/EP2012/050872
(87) Internationale Veröffentlichungsnummer: WO 2012/098230

(56) Entgegenhaltungen:
- EP-A1- 1 808 500
- EP-A2- 1 859 892
- DE-A1- 2 640 797
- DE-A1- 4 314 147
- JP-A- 57 149 108

## Beschreibung

Die Erfindung betrifft ein Verfahren zum Bearbeiten und Härten von metallischen Werkstücken gemäß dem Oberbegriff des Anspruchs 1. Ferner betrifft die Erfindung eine Werkzeugmaschine zum Bearbeiten und Härten von metallischen Werkstücken gemäß dem Oberbegriff des Anspruchs 14. Aus der DE 197 49 939 C2 (entspricht US 6 684 500 B1) ist eine Werkzeugmaschine zum Bearbeiten von Kurbelwellen bekannt, bei der die Kurbelwellen in einer Aufspannung spanend bearbeitet und anschließend gehärtet werden. Zum Härten werden die Kurbelwellen mittels eines Lasers oder eines Induktors erwärmt. Nachteilig ist, dass die Kurbelwellen nach dem Abkühlen einen unerwünschten Verzug aufweisen, der die Bearbeitungsqualität beeinträchtigt und gegebenenfalls eine Nachbearbeitung erforderlich macht.

Aus der EP 1 859 892 A2, die ein Verfahren gemäß dem Oberbegriff des Anspruchs 1 und eine Werkzeugmaschine gemäß dem Oberbegriff des Anspruchs 14 offenbart, ist eine Werkzeugmaschine zum spanenden Bearbeiten, Wärmebehandeln und Feinbearbeiten von Werkstücken bekannt. Ein wellenförmiges Werkstück wird in derselben Aufspannung grob bearbeitet, erwärmt und anschließend mittels eines Kühlmediums, wie beispielsweise flüssigen Stickstoff, abgeschreckt.

Aus der EP 1 808 500 A1 ist ein Wärmetauscher zum Abkühlen von Metallsträngen bekannt. Die aus einem Heizofen austretenden Metallstränge werden durch einen Durchgang des Wärmetauschers geführt und abgekühlt.

Aus der JP 57 149 108 A ist eine thermisch isolierte Werkstückaufnahme bekannt.

Aus der DE 43 14 147 A1 ist eine Werkzeugmaschine bekannt, deren Reitstock einen Kraftaufnehmer und eine zugehörige Regeleinrichtung aufweist, um die Anstellkraft der Zentrierspitze des Reitstocks einzustellen.

Der Erfindung liegt die Aufgabe zu Grunde, ein Verfahren zu schaffen, das ein einfaches Bearbeiten und Härten von metallischen Werkstücken mit einer hohen Bearbeitungsqualität ermöglicht.

Diese Aufgabe wird durch ein Verfahren mit den Merkmalen des Anspruchs 1 gelöst. Das zu bearbeitende Werkstück wird in einer Aufspannung spanend bearbeitet und gehärtet. Zum Härten wird das bearbeitete Werkstück in üblicher Weise erwärmt und anschließend mit einem kryogenen Kühlmedium abgeschreckt. Das kryogene Kühlmedium, das beim Auftreffen auf das Werkstück eine sehr niedrige Temperatur von weit unter 0°C (273, 15 K) hat, führt zu einer entsprechend schnellen Abkühlung des erwärmten Werkstückes, wodurch der Verzug gering ist und im Vergleich zu dem Stand der Technik deutlich reduziert wird. Hierdurch haben die gehärteten Werkstücke eine hohe Bearbeitungsqualität. Der geringe Verzug führt dazu, dass die gehärteten Werkstücke aufgrund des Verzugs überhaupt nicht mehr oder nur in geringem Umfang nachbearbeitet werden müssen. Durch das schnelle Abkühlen und das nicht mehr erforderliche Nachbearbeiten wird zudem die Bearbeitungszeit bzw. Taktzeit verkürzt. Da das kryogenen Kühlmedium verdampft, werden weder die Werkstücke noch die Werkzeugmaschine durch das kryogene Kühlmedium verschmutzt. Eine Entsorgung des kryogenen Kühlmediums ist nicht erforderlich.

Das Erwärmen des Werkstücks erfolgt mittels einer Wärmeeinheit, die vorzugsweise als linear entlang des Werkstücks verfahrbarer Laser und/oder Induktor ausgebildet ist. Um einen kontinuierlichen Wärmeeintrag in das Werkstück zu erzielen, erfolgt das Erwärmen vorzugsweise bei rotierendem Werkstück durch Verfahren der Wärmeeinheit. Direkt anschließend erfolgt das Abschrecken des erwärmten Werkstücks mittels einer linear entlang des Werkstücks verfahrbaren Abschreckeinheit. Die Abschreckeinheit dient zum Zuführen des kryogenen Kühlmediums zu dem erwärmten Werkstück und ist unmittelbar neben der Wärmeeinheit angeordnet. Zum kontinuierlichen und zielgerichteten Abkühlen des Werkstücks erfolgt das Abschrecken vorzugsweise bei rotierendem Werkstück.

Dadurch, dass das wellenförmige Werkstück beidseitig in einer Werkstückaufnahme eingespannt ist, wird eine hohe Bearbeitungsqualität bei der Bearbeitung wellenförmiger Werkstücke gewährleistet. Weiterhin wird eine hohe Bearbeitungsqualität dadurch gewährleistet, dass mindestens eine Werkstückaufnahme zur Kompensation von axialen Ausdehnungen des eingespannten Werkstücks federnd gelagert ist. Axiale Ausdehnungen des eingespannten Werkstücks werden durch die federnde Lagerung kompensiert, sodass die auf das Werkstück wirkenden Kräfte in Folge der Aufspannung während der gesamten Bearbeitung im Wesentlichen gleich bleiben.

Ein Verfahren nach Anspruch 2 gewährleistet ein schnelles und sauberes Abschrecken des Werkstücks. Als Kühlmedium ist flüssiger oder gasförmiger Stickstoff, flüssiger oder gasförmiger Sauerstoff, gasförmiger Wasserstoff, gasförmiges Helium, flüssiges oder gasförmiges Argon, gasförmiges Kohlendioxid und flüssiges oder gasförmiges Erdgas geeignet. Vorzugsweise wird Stickstoff verwendet.

Ein Verfahren nach Anspruch 3 gewährleistet ein schnelles Abschrecken des Werkstücks.

Ein Verfahren nach Anspruch 4 gewährleistet einen geringen Verzug des Werkstücks, da beim Abschrecken die Wärme des Werkstücks im Wesentlichen nur durch Konvektion abgeführt wird. Das kryogene Kühlmedium kann entweder als Gas gespeichert und zu dem Werkstück geführt werden oder als Flüssigkeit gespeichert und erst während der Zufuhr zu dem Werkstück gasförmig werden.

Ein Verfahren nach Anspruch 5 ermöglicht äußerst niedrige Temperaturen des kryogenen Kühlmediums und ein dementsprechend schnelles Abschrecken des Werkstücks.

Ein Verfahren nach Anspruch 6 gewährleistet ein einfaches und bauraumoptimiertes Speichern des kryogenen Kühlmediums.

Ein Verfahren nach Anspruch 7 ermöglicht eine geringere Bearbeitungs- bzw. Taktzeit. Das kryogene Kühlmedium kühlt die Schneide des Werkzeugs wesentlich effektiver als herkömmliche Kühlmedien, wodurch höhere Schnittgeschwindigkeiten und eine entsprechend höhere Zerspanungsproduktivität sowie längere Werkzeugstandzeiten erzielbar sind. Dadurch, dass das kryogene Kühlmedium ohnehin zum Abschrecken des Werkstücks bereitgestellt wird, ist der Zusatzaufwand für die Kühlung des Werkzeugs beim Zerspanen gering. Nachdem das kryogene Kühlmedium verdampft, kann der gesamte Bearbeitungsprozess trocken, also ohne herkömmliche Kühlschmierstoffe durchgeführt werden. Die bearbeiteten Werkstücke sowie die Werkzeugmaschine sind somit absolut sauber. Da kein Kühlschmiermittel entsorgt werden muss, können entsprechende Kosten eingespart werden.

Ein Verfahren nach Anspruch 8 verkürzt die Bearbeitungszeit. Dadurch, dass das Zerspanen und Härten in einer Aufspannung erfolgt, können beide Prozessschritte parallel erfolgen. Während mittels einer Bearbeitungseinrichtung noch eine spanende Bearbeitung erfolgt, kann mittels der Wärmeeinheit bzw. der Abschreckeinheit das bearbeitete Werkstück bereits durch lokales Erwärmen und Abschrecken gehärtet werden. Das parallele Zerspanen und Härten bietet sich insbesondere bei wellenförmigen Werkstücken mit verhältnismäßig großen axialen Abmessungen an.

Ein Verfahren nach Anspruch 9 gewährleistet eine hohe Bearbeitungsqualität, da auch das Feinbearbeiten des Werkstücks in derselben Aufspannung erfolgt. Ein geringer Verzug des Werkstücks durch das Härten kann somit schnell und einfach nachbearbeitet werden. Darüber hinaus können weitere Prozessschritte zur Oberflächenbearbeitung einfach und schnell durchgeführt werden.

Ein Verfahren nach Anspruch 10 gewährleistet eine kurze Bearbeitungszeit. Durch das kryogene Kühlmedium kann das zum Feinbearbeiten verwendete Werkzeug effektiver gekühlt werden, wodurch sich eine höhere Bearbeitungsgeschwindigkeit und -produktivität sowie längere Werkzeugstandzeiten ergeben. Da das kryogene Kühlmedium zum Härten ohnehin bereitgestellt wird, ist der Zusatzaufwand zum Kühlen des beim Feinbearbeiten verwendeten Werkzeugs gering. Da das kryogene Kühlmedium verdampft, ist sowohl das feinbearbeitete Werkstück als auch die Werkzeugmaschine absolut sauber. Eine Entsorgung von herkömmlichen Kühlschmiermitteln entfällt.

Ein Verfahren nach Anspruch 11 verkürzt die Bearbeitungszeit, da das Feinbearbeiten parallel zu dem Härten des Werkstücks erfolgt. Die parallele Bearbeitung wird insbesondere dadurch ermöglicht, dass das Werkstück aufgrund des kryogenen Kühlmediums äußerst schnell abkühlt. Die parallele Bearbeitung bietet sich insbesondere bei wellenförmigen Werkstücken mit einer großen axialen Abmessung an.

Ein Verfahren nach Anspruch 12 gewährleistet eine hohe Bearbeitungsqualität. Dadurch, dass die Werkstückaufnahme gegenüber dem Grundgestell thermisch isoliert ist, kann ein thermischer Verzug in der Aufspannung minimiert werden, wodurch die auf das Werkstück wirkenden Kräfte infolge der Aufspannung während der gesamten Bearbeitung im Wesentlichen gleich bleiben. Durch die Aufspannung verursachte Verzüge des Werkstücks werden somit vermieden.

Ein Verfahren nach Anspruch 13 gewährleistet eine hohe Bearbeitungsqualität. Durch das Nachstellen einer der Werkstückaufnahmen in Abhängigkeit der gemessenen Axialkraft können axiale Ausdehnungen des eingespannten Werkstücks einfach und schnell kompensiert werden, wodurch die auf das Werkstück wirkenden Kräfte infolge der Aufspannung während der gesamten Bearbeitung im Wesentlichen gleich bleiben.

Der Erfindung liegt ferner die Aufgabe zu Grunde, eine Werkzeugmaschine zu schaffen, die ein einfaches Bearbeiten und Härten von metallischen Werkstücken mit einer hohen Bearbeitungsqualität ermöglicht.

Diese Aufgabe wird durch eine Werkzeugmaschine mit den Merkmalen des Anspruchs 14 gelöst. Die Vorteile der erfindungsgemäßen Werkzeugmaschine entsprechen den bereits beschriebenen Vorteilen des erfindungsgemäßen Verfahrens. Insbesondere kann die erfindungsgemäße Werkzeugmaschine entsprechend den Ansprüchen 2 bis 13 weitergebildet werden.

Weitere Merkmale, Vorteile und Einzelheiten der Erfindung ergeben sich aus der nachfolgenden Beschreibung eines Ausführungsbeispiels. Es zeigen:
- Fig. 1: eine perspektivische Ansicht einer Werkzeugmaschine beim spanenden Bearbeiten eines metallischen Werkstücks,
- Fig. 2: eine teilweise geschnittene Ansicht der Werkzeugmaschine in Fig. 1,
- Fig. 3: eine vergrößerte Darstellung einer Bearbeitungs- und einer Härteeinrichtung der Werkzeugmaschine in Fig. 1,
- Fig. 4: eine perspektivische Ansicht der Werkzeugmaschine in Fig. 1 beim Härten des bearbeiteten Werkstücks,
- Fig. 5: eine teilweise geschnittene Darstellung der Werkzeugmaschine in Fig. 4, und
- Fig. 6: eine perspektivische Darstellung der Werkzeugmaschine in Fig. 1 beim Feinbearbeiten des gehärteten Werkstücks.

Eine Werkzeugmaschine 1 weist zur Herstellung von gehärteten wellenförmigen Werkstücken 2 aus Metall ein Grundgestell 3 auf, an dem drei Werkstückaufnahmen 4 bis 6, zwei Bearbeitungseinrichtungen 7, 8 und eine Härteeinrichtung 9 angeordnet sind.

Die erste Werkstückaufnahme 4 ist als Werkstücksspindel ausgebildet und weist ein Spannfutter 10 auf, das mittels eines Spindelantriebsmotors 11 um eine parallel zu einer x-Richtung verlaufende Drehachse 12 drehantreibbar ist. Die Werkstückspindel 4 ist an einer Frontseite 13 des Grundgestells 3 angeordnet und parallel zu der x-Richtung linear verfahrbar. Hierzu sind an der Frontseite 13 erste x-Führungsschienen 14 in einer senkrecht zu der x-Richtung verlaufenden y-Richtung beabstandet voneinander angeordnet, auf denen mittels eines ersten x-Schlittens 15 die Werkstückspindel 4 gelagert ist. Der x-Schlitten 15 ist mittels eines ersten x-Antriebsmotors 16 entlang der x-Führungsschienen 14 linear verfahrbar.

Die zweite Werkstückaufnahme 5 ist mittels eines zweiten x-Schlitten 17 gegenüber zu der Werkstückspindel 4 auf den x-Führungsschienen 14 gelagert. Die Werkstückaufnahme 5 ist als Reitstock ausgebildet und weist einen spitz zulaufenden Werkstückhalter 18 auf, der konzentrisch zu der Drehachse 12 angeordnet und um diese drehbar in einem Gehäuse 19 gelagert ist. Der Werkstückhalter 18 ist mittels eines Federelements 20 federnd in dem Gehäuse 19 gelagert und in der x-Richtung gegen die Federkraft des Federelements 20 axial verlagerbar. Zur Messung einer Axialkraft auf den Werkstückhalter 18 ist zwischen diesem und dem Gehäuse 19 ein Kraftsensor 21 angeordnet, der gemessene Werte der Axialkraft an eine Steuereinrichtung 22 übermittelt. Zwischen dem Werkstückhalter 18 und dem Gehäuse 19 ist eine thermische Isolation 23 angeordnet, die den Werkstückhalter 18 gegenüber dem Gehäuse 19 thermisch isoliert.

Die dritte Werkstückaufnahme 6 ist als Lünette ausgebildet und bezogen auf die y-Richtung unterhalb des Werkstücks 2 angeordnet. Die Lünette 6 ist an einem dritten x-Schlitten 24 befestigt, der mittels eines dritten x-Antriebsmotors 25 auf zweiten x-Führungsschienen 26 parallel zu der x-Richtung linear verfahrbar ist. Die x-Führungsschienen 26 sind in der y-Richtung beabstandet voneinander und unterhalb der x-Führungsschienen 14 an der Frontseite 13 angeordnet. Die x-Führungsschienen 14 und 26 verlaufen parallel zueinander.

Die Bearbeitungseinrichtungen 7, 8 dienen zur spanenden Bearbeitung des eingespannten Werkstücks 2. An einer Oberseite 27 des Grundgestells 3 sind dritte x-Führungsschienen 28 angeordnet, die in einer senkrecht zu der x- und y-Richtung verlaufenden z-Richtung voneinander beabstandet sind und parallel zu der x-Richtung verlaufen. Auf den x-Führungsschienen 28 ist ein vierter x-Schlitten 29 gelagert und mittels eines vierten x-Antriebsmotors 30 parallel zu der x-Richtung linear verfahrbar. An einer Frontseite 31 des x-Schlittens 29 sind erste y-Führungsschienen 32 angeordnet, die in der x-Richtung beabstandet voneinander sind und parallel zu der y-Richtung verlaufen. Auf den y-Führungsschienen 32 ist ein erster y-Schlitten 33 gelagert, der mittels eines y-Antriebsmotors 34 parallel zu der y-Richtung linear verfahrbar ist. An dem y-Schlitten 33 ist ein erster Werkzeugrevolver 35 mit einer Vielzahl von Werkzeugen 36 befestigt. Der Werkzeugrevolver 35 weist ein Gehäuse 37 auf, in dem ein Revolverantriebsmotor 38 angeordnet ist, mittels dem eine Revolverscheibe 39 um eine Drehachse 40 drehantreibbar ist. Die Drehachsen 12 und 40 verlaufen parallel zueinander und parallel zu der x-y-Ebene.

Zum Zuführen eines kryogenen Kühlmediums 41 weist die Bearbeitungseinrichtung 7 eine Zuführleitung 42 auf, die von einem Speicherbehälter 43 zu dem jeweils in Eingriff mit dem Werkstück 2 befindlichen Werkzeug 36 führt. Die Zuführleitung 42 führt beispielsweise durch die Revolverscheibe 39 und das in Eingriff befindliche Werkzeug 36 unmittelbar zu der Schneide des Werkzeugs 36. Der Speicherbehälter 43 ist thermisch isoliert und mittels eines Kühlaggregats 44 kühlbar. Das kryogene Kühlmedium 41 ist mittels einer ersten Förderpumpe 68 durch die Zuführleitung 42 zu dem Werkzeug 36 transportierbar.

Die zweite Bearbeitungseinrichtung 8 ist entsprechend der ersten Bearbeitungseinrichtung 7 ausgebildet und weist einen fünften x-Schlitten 45 auf, der auf den x-Führungsschienen 28 mittels eines fünften x-Antriebsmotors 46 parallel zu der x-Richtung linear verfahrbar ist. An einer Frontseite 47 des x-Schlittens 45 sind zweite y-Führungsschienen 48 angeordnet, auf denen ein zweiter y-Schlitten 49 mittels eines zweiten y-Antriebsmotors 50 parallel zu der y-Richtung linear verfahrbar ist. An dem y-Schlitten 49 ist ein zweiter Werkzeugrevolver 51 angeordnet, der dem ersten Werkzeugrevolver 35 zugewandt ist. Der Werkzeugrevolver 51 weist ein Gehäuse 52 auf, in dem ein Revolverantriebsmotor 53 gelagert ist. Mittels des Revolverantriebsmotors 53 ist eine Revolverscheibe 54 mit Werkzeugen 55 um eine Drehachse 56 drehantreibbar. Die Drehachse 56 ist deckungsgleich zu der Drehachse 40 angeordnet. Zur Zuführung des kryogenen Kühlmediums 41 zu der Schneide des in Eingriff befindlichen Werkzeugs 55 ist eine zweite Zuführleitung 57 zwischen dem Speicherbehälter 43 und dem Werkzeug 55 angeordnet. Die Zuführleitung 57 verläuft beispielsweise durch die Revolverscheibe 54 und das in Eingriff befindliche Werkzeug 55. Das kryogene Kühlmedium 41 wird mittels einer zweiten Förderpumpe 69 von dem Speicherbehälter 43 zu dem Werkzeug 55 transportierbar.

Die Härteeinrichtung 9 ist parallel zu der y-Richtung linear verfahrbar an dem x-Schlitten 29 angeordnet. Hierzu sind an einer Stirnseite 58 des x-Schlittens 29 dritte y-Führungsschienen 59 in z-Richtung beabstandet voneinander befestigt. Auf den y-Führungsschienen 59 ist ein dritter y-Schlitten 60 gelagert und mittels eines dritten y-Antriebsmotors 61 linear verfahrbar. Die Härteeinrichtung 9 umfasst eine U-förmige Wärmeeinheit 62 und eine Abschreckeinheit 63, die nebeneinander an dem y-Schlitten 60 befestigt sind. Die Wärmeeinheit 62 ist als Induktor ausgebildet, sodass das Werkstück 2 mittels Induktion erwärmbar ist. Die Abschreckeinheit 63 umfasst eine Zuführleitung 64 zum Zuführen des kryogenen Kühlmediums 41 und eine Absaugleitung 65 zum Abführen des kryogenen Kühlmediums 41 nach dem Abschrecken des Werkstücks 2. Die Zuführleitung 64 führt von dem Speicherbehälter 43 bis unmittelbar zu dem Induktor 62. Das kryogene Kühlmedium 41 ist mittels einer dritten Förderpumpe 66 von dem Speicherbehälter 43 durch die Zuführleitung 64 zu dem Werkstück 2 transportierbar. Die Absaugung erfolgt mittels einer vierten Förderpumpe 67. Vorzugsweise wird das abgesaugte kryogene Kühlmedium 41 wieder in den Speicherbehälter 43 transportiert.

Die Antriebsmotoren 11, 16, 25, 30, 34, 38, 46, 50, 53 und 61 sowie die Förderpumpen 66 bis 69 sind an die Steuereinrichtung 22 angeschlossen und mittels dieser ansteuerbar.

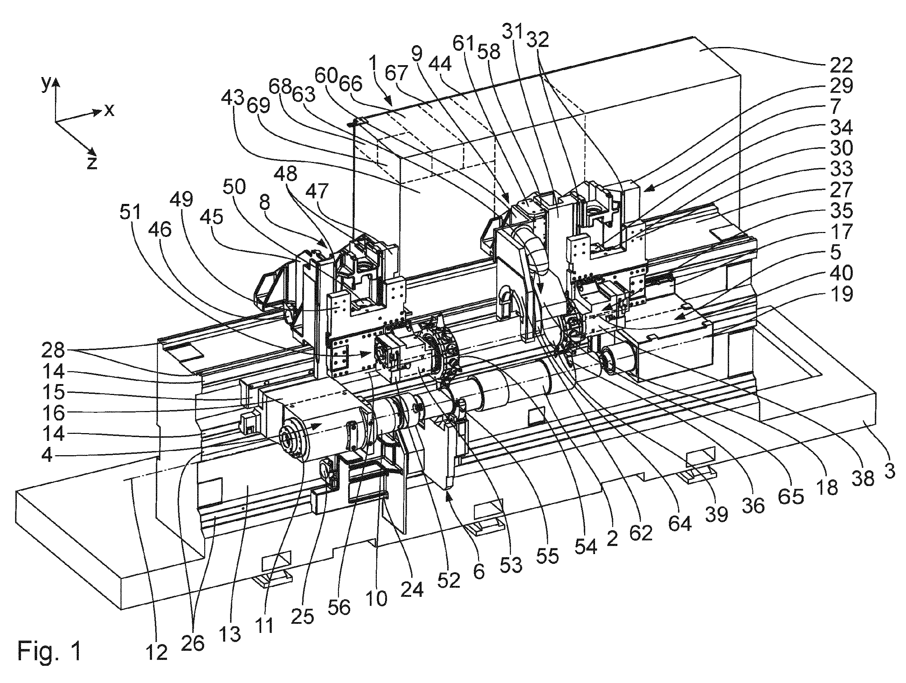

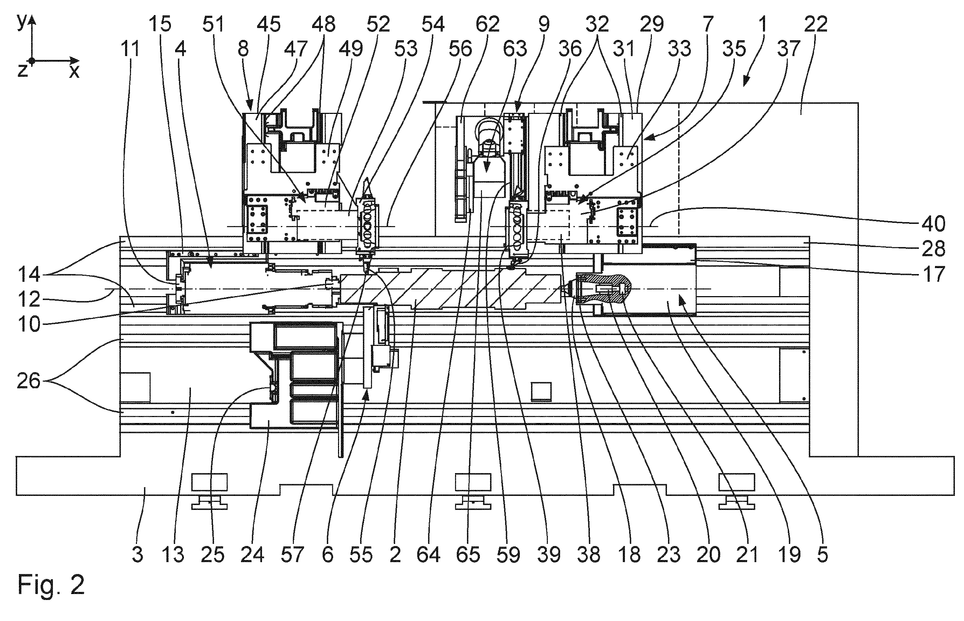

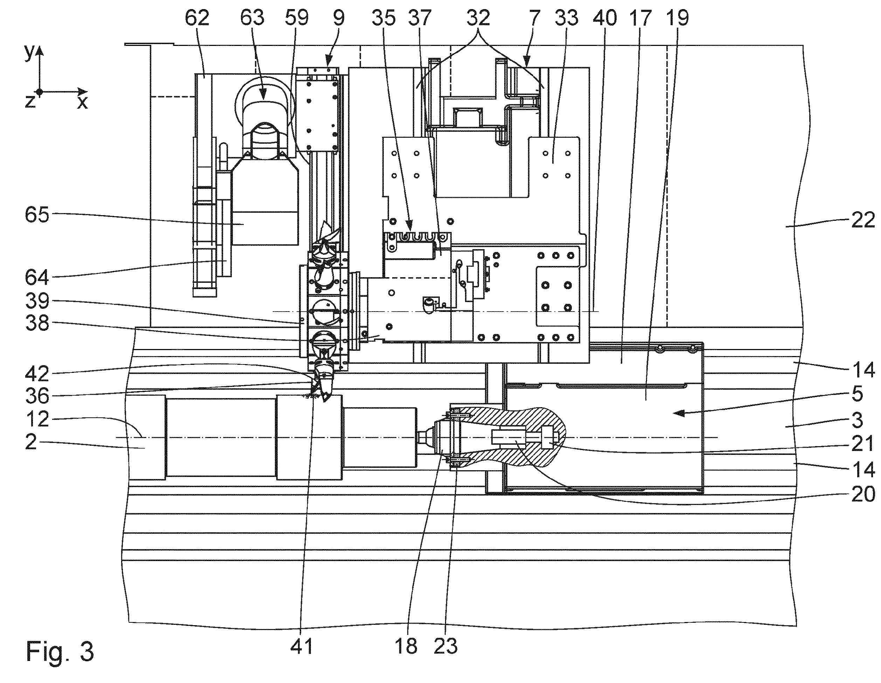

Nachfolgend ist das Bearbeiten und Härten des Werkstücks 2 mittels der Werkzeugmaschine 1 beschrieben. Das Werkstück 2 wird zunächst zwischen der Werkstückspindel 4 und dem Reitstock 5 eingespannt und mittels der Lünette 6 unterstützend gelagert. Anschließend wird das Werkstück 2 mittels der Werkstückspindel 4 drehangetrieben und mittels der Bearbeitungseinrichtung 7 und/oder der Bearbeitungseinrichtung 8 spanend bearbeitet. Die in Eingriff mit dem Werkstück 2 befindlichen Werkzeuge 36 und/oder 55 werden mittels des kryogenen Kühlmediums 41 gekühlt. Hierzu wird das Kühlmedium 41 mittels der Förderpumpen 68, 69 durch die Zuführleitungen 42, 57 zu den Schneiden der Werkzeuge 36, 55 transportiert. Die Werkzeuge 36, 55 werden während des Zerspanens in üblicher Weise mittels der Schlitten 29, 33, 45 und 49 linear verfahren. Das Zerspanen ist in den Fig. 1 bis 3 veranschaulicht.

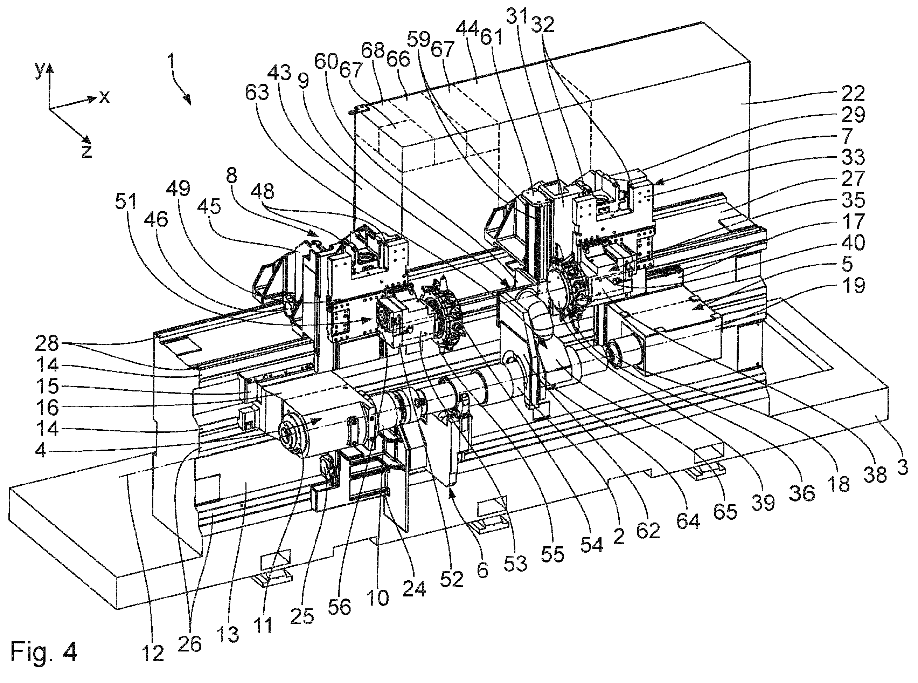

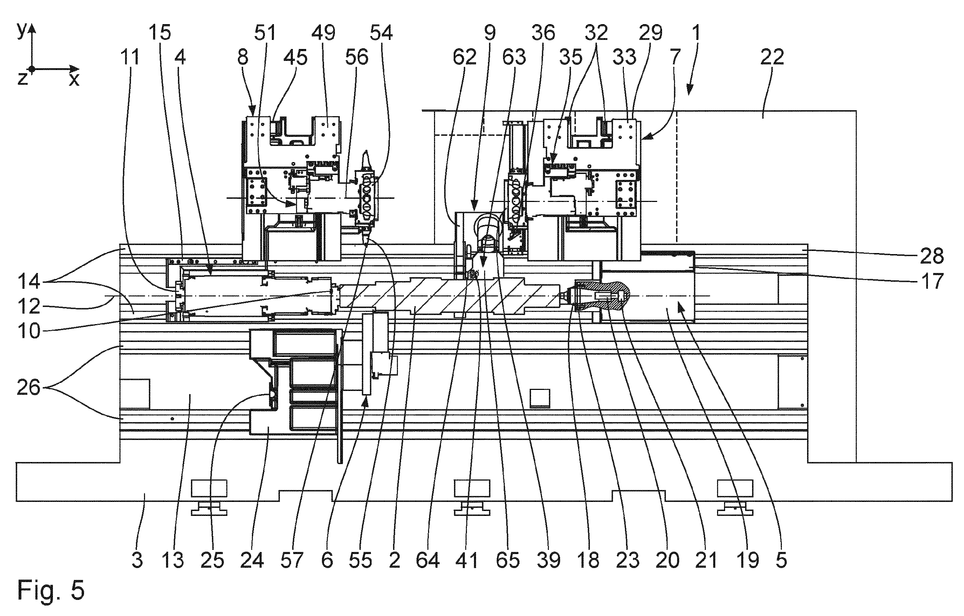

Parallel zum Zerspanen wird das Werkstück 2 mittels der Härteeinrichtung 9 gehärtet. Hierzu wird das Werkstück 2 während des Zerspanens mittels der Wärmeinheit 62 bzw. des Induktors lokal auf die Austenitisierungstemperatur erwärmt und anschließend mittels der Abschreckeinheit 63 abgeschreckt. Da das Werkstück 2 während des Härtens um die Drehachse 12 rotiert, wird dieses gleichmäßig erwärmt und abgeschreckt. Zum Abschrecken wird das kryogene Kühlmedium 41 mittels der Förderpumpe 66 durch die Zuführleitung 64 zu dem Werkstück 2 transportiert und nach dem Auftreffen auf das Werkstück 2 mittels der Förderpumpe 67 über die Absaugleitung 65 wieder abgesaugt. Durch das kryogene Kühlmedium 41 wird das Werkstück 2 äußerst schnell abgekühlt, wodurch der Verzug des Werkstücks 2 gering gehalten wird. Die Härteeinrichtung 9 wird während des Härtens mittels der Schlitten 29 und 60 in üblicher Weise linear verfahren. Alternativ kann das Härten erst nach dem Zerspanen des Werkstücks 2 beginnen. Das Härten ist in den Fig. 4 und 5 veranschaulicht.

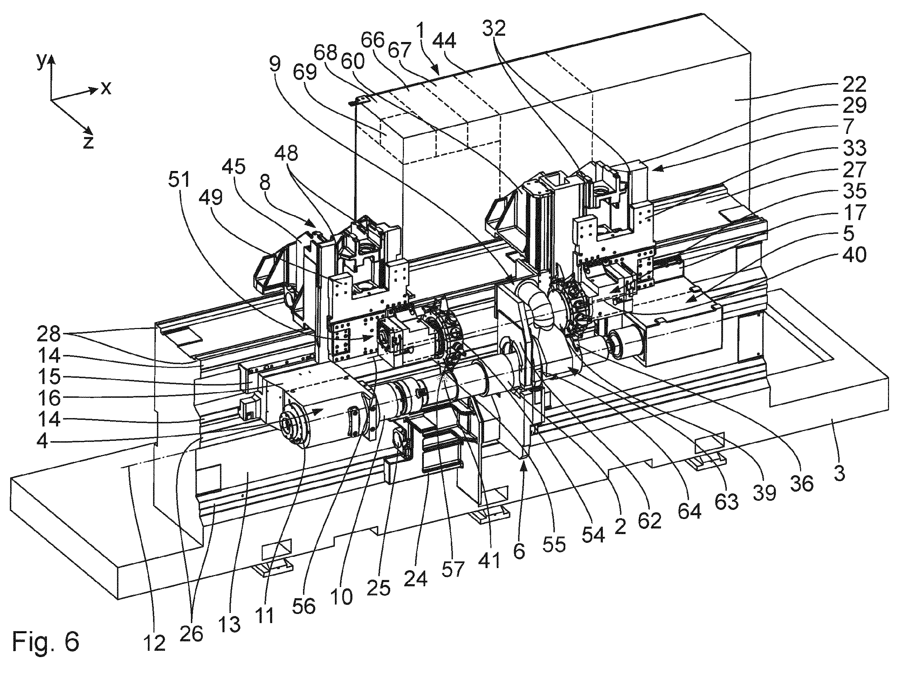

Parallel zu dem Härten erfolgt das Feinbearbeiten bzw. Nachbearbeiten des gehärteten Werkstücks 2. Beim Feinbearbeiten kann das Werkstück 2 beispielsweise spanend bearbeitet oder die Oberfläche des Werkstücks 2 anderweitig verbessert werden. Das Feinbearbeiten erfolgt mittels der ersten Bearbeitungseinrichtung 7 und/oder der zweiten Bearbeitungseinrichtung 8. Die zum Feinbearbeiten in Eingriff mit dem Werkstück 2 befindlichen Werkzeuge 36, 55 werden mittels des kryogenen Kühlmediums 41 gekühlt. Hierzu wird das kryogene Kühlmedium 41 mittels der Förderpumpen 68, 69 von dem Speicherbehälter 43 zu den Schneiden der Werkzeuge 36, 55 transportiert. Alternativ kann das Feinbearbeiten erst beginnen, wenn das Härten bereits abgeschlossen ist. Das Feinbearbeiten ist in Fig. 6 veranschaulicht.

Durch das kryogene Kühlmedium 41 werden beim Zerspanen und/oder beim Feinbearbeiten des Werkstücks 2 die Schneiden der in Eingriff befindlichen Werkzeuge 36, 55 im Vergleich zu herkömmlichen Kühlmedien effektiver gekühlt, wodurch die Schnittgeschwindigkeit und die Bearbeitungsproduktivität erhöht wird. Dadurch, dass das kryogene Kühlmedium 41 spätestens nach dem Abschrecken verdampft ist, ist das Werkstück 2 sowie die gesamte Werkzeugmaschine 1 sauber. Ein Entsorgen des Kühlmediums 41 wie bei herkömmlichen Kühlmedien entfällt.

Während des gesamten Herstellungsvorgangs wird mittels des Kraftsensors 21 die auf das Werkstück 2 wirkende Axialkraft gemessen. Axiale Ausdehnungen des eingespannten Werkstücks 2 werden in gewissen Grenzen mittels des Federelements 20 kompensiert. Übersteigt die gemessene Axialkraft trotz der federnden Lagerung eine gewisse Grenze, so wird die Werkstückspindel 4 und/oder der Reitstock 5 in der x-Richtung nachjustiert. Zur Vermeidung von starken Temperaturschwankungen am Federelement 20 bzw. dem Kraftsensor 21 ist der Werkstückhalter 18 mittels der Isolation 23 thermisch abgeschirmt. Dadurch, dass das Zerspanen, Härten und Feinbearbeiten des Werkstückes 2 in einer Aufspannung erfolgt, wird einerseits eine hohe Bearbeitungsqualität und andererseits eine geringe Bearbeitungs- bzw. Taktzeit erreicht.

Als kryogenes Kühlmedium 41 wird vorzugsweise Stickstoff verwendet. Der Stickstoff 41 wird als Flüssigkeit bei einer Temperatur unterhalb von dessen Siedepunkt (-195,79 °C bzw. 77,36 K) in dem Speicherbehälter 43 gespeichert. Der Stickstoff 41 kann während des Transports durch die Zuführleitungen 42, 57 und 64 bis zum Auftreffen auf das Werkstück 2 bzw. die Werkzeuge 36, 55 flüssig bleiben. Alternativ kann der Stickstoff 41 bis zum Auftreffen auf das Werkstück 2 bzw. dem Austreten aus den Werkzeugen 36, 55 gasförmig werden und eine Temperatur oberhalb des Siedepunkts, jedoch vorzugsweise unterhalb von -180 °C (93,15 K) annehmen.

Als kryogenes Kühlmedium 41 kann prinzipiell mindestens ein Medium aus der Gruppe Stickstoff, Sauerstoff, Wasserstoff, Helium, Argon, Kohlendioxid und Erdgas verwendet werden. Das kryogene Kühlmedium 41 kann flüssig und/oder gasförmig sein. Das kryogene Kühlmedium 41 weist beim Auftreffen auf das Werkstück 2 beim Zerspanen, Härten und/oder Feinbearbeiten eine Temperatur von weniger als -60 °C (213,15 K), insbesondere von weniger als -120 °C (153,15), insbesondere von weniger als - 150 °C (123,15), und insbesondere von weniger als -180 °C (93,15) auf. Die herzustellenden Werkstücke 2 können beispielsweise Wellen, Zahnräder, Ritzelwellen, Kurbelwellen, Nockenwellen, Schaltwellen und/oder Flanschteile sein. Das Zerspanen und Feinbearbeiten kann durch Drehen, Drehfräsen, Kaltwalzen, Verzahnen, Bohren, Kurbelwellenfräsen, Nockenwellenfräsen und/oder Schleifen erfolgen.

## Patentansprüche

1. Verfahren zum Bearbeiten und Härten von metallischen Werkstücken mit folgenden Schritten:
- Spannen eines zu bearbeitenden Werkstücks (2), wobei das Werkstück (2) wellenförmig ist und beidseitig in einer Werkstückaufnahme (4 bis 6) einer Werkzeugmaschine (1) eingespannt ist,
- Zerspanen des in den Werkstückaufnahmen (4 bis 6) eingespannten Werkstückes (2),
- Härten des Werkstücks (2) durch
-- Erwärmen des bearbeiteten und in den Werkstückaufnahmen (4 bis 6) eingespannten Werkstücks (2) und
-- Abschrecken des erwärmten und in den Werkstückaufnahmen (4 bis 6) eingespannten Werkstücks (2) mit einem kryogenen Kühlmedium (41),
**dadurch gekennzeichnet,**
**dass** mindestens eine Werkstückaufnahme (5) zur Kompensation von axialen Ausdehnungen des eingespannten Werkstücks (2) federnd gelagert ist.

2. Verfahren nach Anspruch 1, **dadurch gekennzeichnet, dass** das kryogene Kühlmedium (41) mindestens ein Medium aus der Gruppe Stickstoff, Sauerstoff, Wasserstoff, Helium, Argon, Kohlendioxid und Erdgas ist.

3. Verfahren nach Anspruch 1 oder 2, **dadurch gekennzeichnet, dass** das kryogene Kühlmedium (41) beim Auftreffen auf das erwärmte Werkstück (2) eine Temperatur von weniger als -60 °C, insbesondere von weniger als -120 °C, insbesondere von weniger als -150 °C, und insbesondere von weniger als -180 °C aufweist.

4. Verfahren nach einem der Ansprüche 1 bis 3, **dadurch gekennzeichnet, dass** das kryogene Kühlmedium (41) als Gas auf das erwärmte Werkstück (2) trifft.

5. Verfahren nach einem der Ansprüche 1 bis 3, **dadurch gekennzeichnet, dass** das kryogene Kühlmedium (41) als Flüssigkeit auf das erwärmte Werkstück (2) trifft.

6. Verfahren nach einem der Ansprüche 1 bis 5, **dadurch gekennzeichnet, dass** das kryogene Kühlmedium (41) als Flüssigkeit gespeichert wird.

7. Verfahren nach einem der Ansprüche 1 bis 6, **dadurch gekennzeichnet, dass** mittels des kryogenen Kühlmediums (41) ein zum Zerspanen verwendetes Werkzeug (36, 55) gekühlt wird.

8. Verfahren nach einem der Ansprüche 1 bis 7, **dadurch gekennzeichnet, dass** das Erwärmen und insbesondere das Abschrecken während des Zerspanens des Werkstücks (2) erfolgt.

9. Verfahren nach einem der Ansprüche 1 bis 8, **dadurch gekennzeichnet, dass** ein Feinbearbeiten des gehärteten und in der Werkstückaufnahme (4 bis 6) eingespannten Werkstücks (2) erfolgt.

10. Verfahren nach Anspruch 9, **dadurch gekennzeichnet, dass** mittels des kryogenen Kühlmediums (41) ein zum Feinbearbeiten verwendetes Werkzeug (36, 55) gekühlt wird.

11. Verfahren nach Anspruch 9 oder 10, **dadurch gekennzeichnet, dass** das Feinbearbeiten während des Abschreckens des Werkstücks (2) erfolgt.

12. Verfahren nach einem der Ansprüche 1 bis 11, **dadurch gekennzeichnet, dass** mindestens eine Werkstückaufnahme (5) gegenüber einem Grundgestell (3) der Werkzeugmaschine (2) thermisch isoliert ist.

13. Verfahren nach einem der Ansprüche 1 bis 12, **dadurch gekennzeichnet, dass** mittels eines Kraftsensors (21) eine Axialkraft auf mindestens eine Werkstückaufnahme (5) gemessen und in deren Abhängigkeit axiale Ausdehnungen des eingespannten Werkstücks (2) durch Verfahren einer der Werkstückaufnahmen (4, 5) kompensiert werden.

14. Werkzeugmaschine zum Bearbeiten und Härten von metallischen Werkstücken, umfassend
- ein Grundgestell (3),
- an dem Grundgestell (3) angeordnete Werkstückaufnahmen (4 bis 6) zum beidseitigen Spannen eines zu bearbeitenden wellenförmigen Werkstücks (2),
- eine Bearbeitungseinrichtung (7, 8) zum Zerspanen des Werkstücks (2),
- eine Härteeinrichtung (9) zum Härten des bearbeiteten Werkstücks (2) mit
-- einer Wärmeeinheit (62) zum Erwärmen des Werkstücks (2), und
-- einer Abschreckeinheit (63), die derart ausgebildet ist, dass das erwärmte und in den Werkstückaufnahmen (4 bis 6) eingespannte Werkstück (2) mit einem kryogenen Kühlmedium (41) abschreckbar ist, und
- einer Steuereinrichtung (22) zum Steuern des Bearbeitens und Härtens,
**dadurch gekennzeichnet,**
**dass** mindestens eine Werkstückaufnahme (5) zur Kompensation von axialen Ausdehnungen des eingespannten Werkstücks (2) federnd gelagert ist.

## Claims

1. Method for the processing and hardening of metallic workpieces comprising the steps of:
- clamping a workpiece (2) to be processed, wherein the workpiece (2) is shaft-shaped and clamped on both ends in a workpiece holder (4 to 6) of a machine tool (1),
- metal-cutting processing the workpiece (2) clamped in the workpiece holders (4 to 6),
- hardening the workpiece (2) by
-- heating the workpiece (2) that is processed and clamped in the workpiece holders (4 to 6) and
-- quenching the workpiece (2) that is heated and clamped in the workpiece holders (4 to 6) with a cryogenic cooling medium (41)
**characterized in**
**that** at least one workpiece holder (5) is spring-mounted for compensating for axial expansions of the clamped workpiece (2).

2. Method according to claim 1, **characterized in that** the cryogenic cooling medium (41) is at least one medium from the group including nitrogen, oxygen, hydrogen, helium, argon, carbon dioxide and natural gas.

3. Method according to claim 1 or 2, **characterized in that** the cryogenic cooling medium (41) has a temperature of less than -60°C, in particular of less than -120°C, in particular of less than -150°C, and in particular of less than -180°C, upon arrival at the heated workpiece (2).

4. Method according to one of claims 1 to 3, **characterized in that** the cryogenic cooling medium (41) arrives at the heated workpiece (2) as a gas.

5. Method according to one of claims 1 to 3, **characterized in that** the cryogenic cooling medium (41) arrives at the heated workpiece (2) as a liquid.

6. Method according to one of claims 1 to 5, **characterized in that** the cryogenic cooling medium (41) is stored as a liquid.

7. Method according to one of claims 1 to 6, **characterized in that** by means of the cryogenic cooling medium (41), a tool (36, 55) that is used for metal cutting is cooled.

8. Method according to one of claims 1 to 7, **characterized in that** the heating and in particular the quenching occurs during the metal-cutting processing of the workpiece (2).

9. Method according to one of claims 1 to 8, **characterized in that** fine processing occurs with the hardened workpiece (2) clamped in the workpiece holder (4 to 6).

10. Method according to claim 9, **characterized in that** by means of the cryogenic cooling medium (41) a tool (36, 55) used for fine processing is cooled.

11. Method according to claim 9 or 10, **characterized in that** the fine processing occurs during the quenching of the workpiece (2).

12. Method according to one of claims 1 to 11, **characterized in that** at least one workpiece holder (5) is thermally insulated with respect to a base frame (3) of the machine tool (2).

13. Method according to one of claims 1 to 12, **characterized in that** by means of a force sensor (21), an axial force is measured on at least one workpiece holder (5) and depending on the axial force, axial expansions of the clamped workpiece (2) are compensated by movement of one of the workpiece holders (4, 5).

14. A machine tool for processing and hardening metallic workpieces, comprising:
- a base frame (3),
- a workpiece holder (4 to 6) mounted on base frame (3) for clamping on both sides a shaft-shaped workpiece (2) to be processed,
- a processing device (7, 8) for metal-cutting processing the workpiece (2),
- a hardening device (9) for hardening the processed workpiece (2) with
-- a heating unit (62) for heating the workpiece (2), and
-- a quenching unit (63) configured such that the heated workpiece (2) clamped in the workpiece holders (4 to 6) is quenchable with a cryogenic cooling medium (41), and,
- a control device (22) for controlling the processing and hardening
**characterized in**
**that** at least one workpiece holder (5) is spring-mounted for compensating for axial expansions of the clamped workpiece (2).

## Revendications

1. Procédé d'usinage et de durcissement de pièces métalliques présentant les étapes suivantes :
- le serrage d'une pièce (2) à usiner, la pièce (2) étant ondulée et étant serrée de part et d'autre dans un logement de pièce (4 à 6) d'une machine-outil (1),
- l'enlèvement des copeaux de la pièce (2) serrée dans les logements d'outil (4 à 6),
- le durcissement de la pièce (2) par
-- le réchauffement de la pièce (2) usinée et serrée dans les logements de pièce (4 à 6) et
-- la trempe de la pièce (2) réchauffée et serrée dans les logements de pièce (4 à 6) avec un agent de refroidissement cryogénique (41),
**caractérisé en ce**
**qu'**au moins un logement de pièce (5) est logé de manière élastique pour la compensation d'extensions axiales de la pièce (2) serrée.

2. Procédé selon la revendication 1, **caractérisé en ce que** l'agent de refroidissement cryogénique (41) est au moins un agent du groupe de l'azote, de l'oxygène, de l'hydrogène, de l'hélium, de l'argon, du dioxyde de carbone et du gaz naturel.

3. Procédé selon la revendication 1 ou 2, **caractérisé en ce que** l'agent de refroidissement cryogénique (41) présente lors de l'impact sur la pièce réchauffée (2) une température inférieure à -60 °C, en particulier inférieure à -120 °C, en particulier inférieure à -150 °C et en particulier inférieure à 180 °C.

4. Procédé selon l'une quelconque des revendications 1 à 3, **caractérisé en ce que** l'agent de refroidissement cryogénique (41) rencontre sous forme de gaz la pièce réchauffée (2).

5. Procédé selon l'une quelconque des revendications 1 à 3, **caractérisé en ce que** l'agent de refroidissement cryogène (41) rencontre sous forme de liquide la pièce réchauffée (2).

6. Procédé selon l'une quelconque des revendications 1 à 5, **caractérisé en ce que** l'agent de refroidissement cryogénique (41) est stocké sous forme de liquide.

7. Procédé selon l'une quelconque des revendications 1 à 6, **caractérisé en ce qu'**un outil (36, 55) utilisé pour l'enlèvement de copeaux est refroidi à l'aide de l'agent de refroidissement cryogénique (41).

8. Procédé selon l'une quelconque des revendications 1 à 7, **caractérisé en ce que** le réchauffement et en particulier la trempe sont effectués pendant l'enlèvement de copeaux de la pièce (2).

9. Procédé selon l'une quelconque des revendications 1 à 8, **caractérisé en ce qu'**un usinage fin de la pièce (2) durcie et serrée dans le logement de pièce (4 à 6) est effectué.

10. Procédé selon la revendication 9, **caractérisé en ce qu'**un outil (36, 55) utilisé pour l'usinage fin est refroidi à l'aide de l'agent de refroidissement cryogénique (41).

11. Procédé selon la revendication 9 ou 10, **caractérisé en ce que** l'usinage fin est effectué pendant la trempe de la pièce (2).

12. Procédé selon l'une quelconque des revendications 1 à 11, **caractérisé en ce qu'**au moins un logement de pièce (5) est isolé thermiquement par rapport à un bâti de base (3) de la machine-outil (2).

13. Procédé selon l'une quelconque des revendications 1 à 12, **caractérisé en ce qu'**une force axiale sur au moins un logement de pièce (5) est mesurée à l'aide d'un capteur de force (21) et en fonction de laquelle des extensions axiales de la pièce (2) serrée sont compensées par le déplacement d'un des logements de pièce (4, 5).

14. Machine-outil pour l'usinage et le durcissement de pièces métalliques, comprenant
- un bâti de base (3),
- des logements de pièce (4 à 6) agencés sur le bâti de base (3) pour le serrage de part et d'autre d'une pièce (2) ondulée à usiner,
- un dispositif d'usinage (7, 8) pour l'enlèvement de copeaux de la pièce (2),
- un dispositif de durcissement (9) pour le durcissement de la pièce usinée (2) avec
-- une unité thermique (62) pour le réchauffement de la pièce (2), et
-- une unité de trempe (63) qui est réalisée de telle manière que la pièce (2) réchauffée et serrée dans les logements de pièce (4 à 6) puisse être trempée avec un agent de refroidissement (41) cryogénique, et
- un dispositif de commande (22) pour la commande de l'usinage et du durcissement,
**caractérisée en ce**
**qu'**au moins un logement de pièce (5) est logé de manière élastique pour la compensation d'extensions axiales de la pièce (2) serrée.
